# EUROPEAN PATENT APPLICATION

(11) **EP 1 615 011 A1**
(43) Date of publication of application: **11.01.2006**
(21) Application number: 04103237.6
(22) Date of filing: 08.07.2004
(51) Int. Cl.: G01K 11/32, G01L 1/24, G01D 5/353

(54) **Method and system for obtaining physical data by means of a distributed fiber optical sensing cable**

(71) Applicant: SHELL INTERNATIONALE RESEARCH MAATSCHAPPIJ B.V., 2596 HR Den Haag (NL)
(72) Inventor: JÄÄSKELÄINEN, Kari-Mikko, 2288 GS, Rijswijk (NL); VAN DER SPEK, Alexander Michael, 3053 ZN, Rotterdam (NL)

(57) **Abstract**

A method of obtaining physical data, such as temperature and/or pressure, by means of a distributed fiber optical (DTS or DPS) sensing cable comprises:
- transmitting light pulses into a first end (1A) of the fiber optical sensing cable (1) by means of a pulsed light transmission and receiving assembly (10);
- arranging a reflective element (11) at a second end (1B) of the distributed fiber optical sensing cable (1) such that light pulses (12) and Raman backscattered light are reflected by the reflective element (11) into the second end (1B) of the distributed fiber optical sensing cable (1) and travel towards the first end (1A) of said cable (as illustrated by arrows 15 and 16), and
- obtaining physical data from the Raman spectrum of light backscattered at different points of the length of the distributed fiber optical cable (1) from said points directly (arrows 14), as well as indirectly (arrows 16 and 17) via the reflective element (11), towards the pulsed light transmission and receiving assembly (10).

## Description

### BACKGROUND OF THE INVENTION

The invention relates to a method and system for obtaining physical data, such as temperature and/or pressure by means of a distributed fiber optical sensing cable.

It is generally desirable to make such measurements by means of a double ended or U-shaped fiber optical sensing cable. In use light pulses are transmitted alternatingly from each end of the cable such that the effects of attenuation of the light pulses as they travel along the length of the fiber can be assessed and the effects thereof on the measured physical data can be inhibited.

European patent application EP 0424120, Japanese patent application JP 2001124529A and International patent application WO 00/49273 disclose methods for installing a double ended fiber optical sensing cable in a guide conduit.

In the method known from Japanese patent application JP 2001125529A a distributed strain and displacement sensing fiber optical cable is bent into a U-shape and lowered into a underground borehole by means of a weight suspended from the U-folded nose section of the optical fiber.

In the method known from International patent application WO 00/49273 a U-folded distributed temperature sensing fiber optical cable is inserted into a coiled tubing within an underground borehole by connecting the U-folded mid-section of the fiber optical cable to a plug which is bull headed by pumping fluid though the tubing to carry the plug and the fiber optical cable to the bottom of the well.

The known U-shaped, double ended, distributed sensing fiber optical assemblies are inserted into guide conduits that are formed by a well casing and coiled well tubing having an internal width which is typically several centimeters and they are not configured to be installed in small diameter guide conduits.

An object of the present invention is to provide a method and system for obtaining physical data, such as temperature and/or pressure, by means of a distributed sensing fiber optical assembly in which attenuation of the light pulses can be detected in a manner largely similar to the detection of attenuation of the light pulses in a double ended distributed sensing fiber optical assembly, but which can be installed as a single ended distributed sensing fiber optical cable within a small diameter conduit.

### SUMMARY OF THE INVENTION

The method according to the invention for obtaining physical data, such as temperature and/or pressure, by means of a distributed fiber optical sensing cable comprises:
- transmitting light pulses into a first end of the fiber optical sensing cable by means of a pulsed light transmission and receiving assembly;
- arranging a reflective element at a second end of the distributed fiber optical sensing cable such that light pulses and backscattered light are reflected by the reflective element into the second end of the distributed fiber optical sensing cable and travel towards the first end of said cable, and
- obtaining physical data from the spectrum of light backscattered at different points of the length of the distributed fiber optical cable from said points directly, as well as indirectly via the reflective element, towards the pulsed light transmission and receiving assembly.

It is preferred that
- the light pulses travel down along the length of the cable from the first towards the second end of the cable and are then reflected by the reflective element such that the reflected light pulses travel up along the length of the cable;
- the light backscattered down at different points along the length of the cable as a result of the reflected light pulses, which backscattered light is subsequently reflected by the reflective element such that the backscattered light subsequently travels up as a train of indirectly reflected light pulses towards the light transmission and receiving assembly;
- the light backscattered up at different points along the length of the cable as a result of light pulses traveling down from the first end towards the second end is transmitted as a train of directly reflected light pulses towards the light transmission and receiving assembly; and
- the trains of directly and indirectly reflected light pulses are compared with each other to compensate for changes to the light pulses as they travel along the length of the distributed fiber optical sensing cable.

The fiber optical sensing cable may be a single ended optical fiber, which is used as a distributed temperature sensing (DTS) cable and is operated in a fashion similar to the operation of a double ended or U-shaped optical fiber.

The Raman peak or peaks of the spectra of the directly and indirectly reflected trains of backscattered light pulses may be analysed in a data processor and compared with each other to compensate for any changes to the light pulses as they travel from the first towards the second end of the fiber and vice versa.

It is preferred that the fiber optical sensing cable is along at least a substantial part of its length arranged within a protective guide conduit.

The fiber optical sensing cable may be suspended as a distributed temperature and/or pressure sensor (DTS or DPS) within an underground borehole.
The system according to the invention for obtaining physical data, such as temperature and/or pressure, by means of a distributed fiber optical sensing cable comprises:
- a distributed fiber optical sensing cable
- a pulsed light transmission and receiving assembly for transmitting light pulses into a first end of the fiber optical sensing cable;
- a reflective element arranged at a second end of the distributed fiber optical sensing cable such that in use light pulses and backscattered light are reflected by the reflective element into the second end of the distributed fiber optical sensing cable and travel towards the first end of said cable, and
- a data processor for obtaining physical data from the spectrum of light backscattered at different points of the length of the distributed fiber optical cable from said points directly, as well as indirectly via the reflective element, towards the pulsed light transmission and receiving assembly.

The reflective element may be provided by a mirror, a reflective coating at said second end of the fiber, a micro optic component or a fiber bragg grating (FBG).

These and other features, advantages and embodiments of the method and system according to the invention are described in the following detailed description in which reference is made to the accompanying drawings and in the accompanying abstract and claims.

### BRIEF DESCRIPTION OF THE DRAWINGS

FIG.1 illustrates a Distributed Temperature Sensing (DTS) optical fiber assembly;
FIG.2 shows a typical spectrum of light backscattered from different points along the length of the fiber, which spectrum carries information about the temperature along the length of the fiber;
FIG.3 is a schematic representation of a single ended distributed sensing fiber optical cable according to the invention into which at one end a light pulse is transmitted, which light pulse is reflected by a reflective element at a second end of the cable; and
FIG.4 shows how in the fiber optical cable of FIG.3 the light pulse and backscattered Raman light are reflected by the reflective element.

### DETAILED DESCRIPTION OF A PREFERRED EMBODIMENT

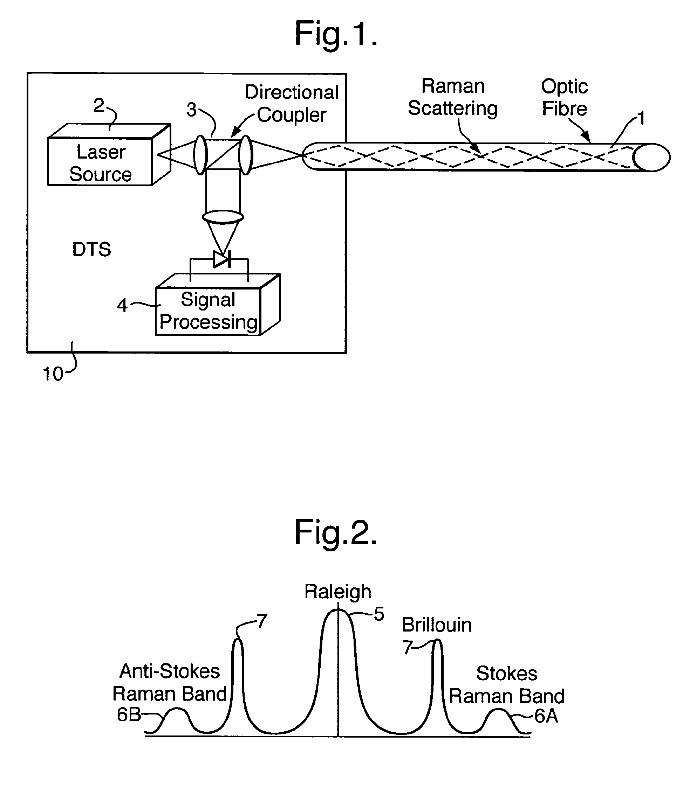

FIG.1 illustrates the operation of a Distributed Temperature Sensing (DTS) assembly comprising an optical sensing fiber 1 and a DTS processor 10, which is based on optical time-domain reflectometry(known as OTDR).

The DTS processor 10 comprises a pulsed laser source 2, which is coupled to the optical fiber 1 that is the sensing element. The light is backscattered as the pulse propagates through the fiber optical cable 1 owing to density and composition as well as to molecular and bulk vibrations. A portion of the backscattered light is guided back to the light source 2 and split of by a directional coupler 3 to a receiver 4 that also forms part of the DTS processor 10.. As the speed of light within the fiber optical cable 1 is known, the distance that the light has passed through the fiber optical cable 1 can be derived from the travel time in the optical fiber.

FIG.2 illustrates that the backscattered light, which is backscattered at various points along the length of the fiber optical cable 1 includes different spectral components, which contain peaks that are known as Rayleigh and Brillouin peaks and Raman bands. The Rayleigh peak 5 is independent of temperature but is useful in identifying breaks and inhomogeneities along the fiber optical cable 1. The Raman spectral bands 6 are caused by thermally influenced molecular vibrations. These are naturally occurring phenomena in glass as well as in fluids, gases and solids. The Raman spectral bands 6 can be used to obtain information about distribution of temperature along the optical fiber.

The Raman backscattered light has two components, Stokes 6A and Anti-Stokes 6B, one being only weakly dependent on temperature and the other being greatly influenced by temperature. The relative intensities between the Stokes and Anti-Stokes components 6A and 6B are a function of temperature at which the backscattering occurred. Therefore, temperature can be determined at any point along the length of the fiber optical cable 1 by comparing at each point the Stokes and Anti-stokes components 6A and 6B of the light backscattered from the particular point. The Brillouin peaks 7 may be used to monitor strain along the length of the optical fiber optical cable 1.

Since the optical fiber may degrade when exposed to a hostile environment or when mechanically damaged it is common practice to install a fiber optical cable 1 in a U-shaped configuration in a guide conduit and to transmit light pulses alternatingly into each end of the U-shaped cable so that at each point along the length of the cable 1 two DTS measurements are made, which are compared with each other such that effects of the fiber decay on the DTS measurements can be compensated for. A DTS system comprising a U-shaped DTS cable in a guide conduit is commonly known as a double ended DTS system. A complication of the use of a double ended DTS system is that installation in a guide conduit is a complex procedure, which may damage the fiber optical cable 1 and that the U-bend in the cable 1 takes space and causes additional decay of the light pulses. It is an object of the present invention to provide a single ended fiber optical cable 1, which does not require a U-bend, which has a performance similar to that of a double ended fiber optical cable 1.

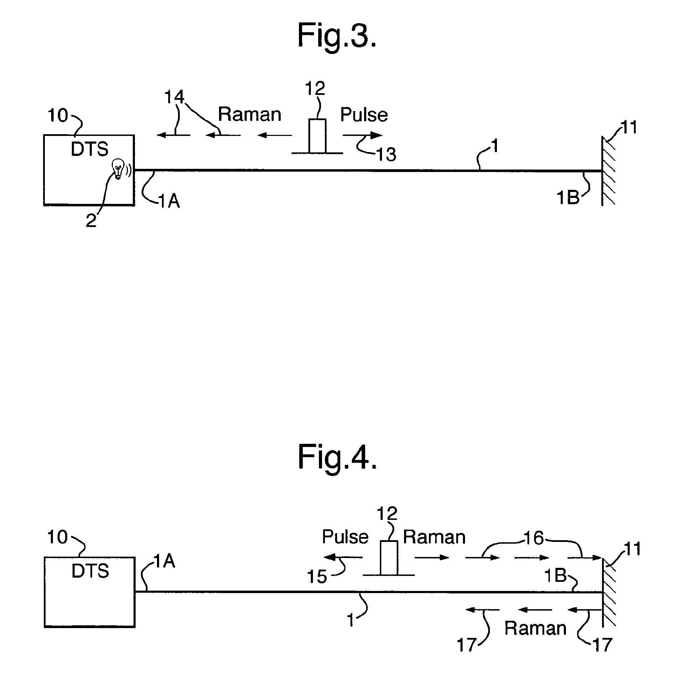

FIG.3 and 4 show a distributed sensing fiber optical cable 1 according to the invention which is at a first end thereof connected to a DTS processor 10 comprising a laser source 2, directional coupler 3 and signal processing unit 3 as shown in FIG.1 and at another end thereof to a reflective element 11.

FIG.3 shows how a light pulse 12 travels from the first towards the second end of the fiber optical cable 1 as illustrated by arrow 13 and causes Raman scattered light to travel back to the DTS processor 10 as illustrated by arrow 14. The time of flight of the backscattered light and the intensity of the Stokes and anti-Stokes Raman bands thereof is converted into a DTS signal in the manner as described with reference to FIG.1 and 2.

FIG.4 shows how the reflective element 11 reflects the pulse 12 back into to the fiber optical cable 1 as illustrated by arrow 15. The reflected pulse 12 also generates backscattered Raman light, which is backscattered towards the reflective element 11 as illustrated by arrow 16. The reflective element 11 will also reflect the Raman light back into the fiber optical cable 1 towards the DTS processor 10 as illustrated by arrow 17. The Raman light reflected by the reflective element 11 will contain temperature information similar to that of a U-shaped double ended DTS fiber optical cable 1 and can therefore be processed in a similar manner as the DTS data obtained by a U-shaped double ended DTS fiber optical cable 1.

Thus the performance of the straight, unbend, single ended DTS fiber optical cable 1 with reflective element 11 according to the invention has a performance similar to that of a conventional U-shaped double ended fiber optical cable, but can be installed easier in a guide conduit and such that the inner diameter of the guide conduit only needs to be larger than the outer width of the fiber optical cable, which is typically less than 0.5 mm.

The reflective element may be a reflective element, a reflective coating, a micro optic component or a Fiber Bragg Grating (FBG).

## Claims

1. A method of obtaining physical data, such as temperature and/or pressure, by means of a distributed fiber optical sensing cable, the method comprising:
- transmitting light pulses into a first end of the fiber optical sensing cable by means of a pulsed light transmission and receiving assembly;
- arranging a reflective element at a second end of the distributed fiber optical sensing cable such that light pulses and backscattered light are reflected by the reflective element into the second end of the distributed fiber optical sensing cable and travel towards the first end of said cable, and
- obtaining physical data from the spectrum of light backscattered at different points of the length of the distributed fiber optical cable from said points directly, as well as indirectly via the reflective element, towards the pulsed light transmission and receiving assembly.

2. The method of claim 1, wherein:
- the light pulses travel down along the length of the cable from the first towards the second end of the cable and are then reflected by the reflective element such that the reflected light pulses travel up along the length of the cable;
- the light backscattered down at different points along the length of the cable as a result of the reflected light pulses, which backscattered light is subsequently reflected by the reflective element such that the backscattered light subsequently travels up as a train of indirectly reflected light pulses towards the light transmission and receiving assembly;
- the light backscattered up at different points along the length of the cable as a result of light pulses traveling down from the first end towards the second end is transmitted as a train of directly reflected light pulses towards the light transmission and receiving assembly; and
- the trains of directly and indirectly reflected light pulses are compared with each other to compensate for changes to the light pulses as they travel along the length of the distributed fiber optical sensing cable.

3. The method of claim 2, wherein the fiber optical sensing cable is a single ended optical fiber which is used as a distributed temperature sensing (DTS) cable and is operated in a fashion similar to the operation of a double ended or U-shaped optical fiber.

4. The method of claim 3, wherein the Raman peak or peaks of the spectra of the directly and indirectly reflected trains of backscattered light pulses are analysed in a data processor and compared with each other to compensate for any changes to the light pulses as they travel from the first towards the second end of the fiber and vice versa.

5. The method of claim 1, wherein the fiber optical sensing cable is along at least a substantial part of its length arranged within a protective guide conduit.

6. The method of claim 1, wherein the fiber optical sensing cable is suspended within an underground borehole.

7. A system for obtaining physical data, such as temperature and/or pressure, by means of a distributed fiber optical sensing cable, the system comprising:
- a distributed fiber optical sensing cable
- a pulsed light transmission and receiving assembly for transmitting light pulses into a first end of the fiber optical sensing cable;
- a reflective element arranged at a second end of the distributed fiber optical sensing cable such that in use light pulses and backscattered light are reflected by the reflective element into the second end of the distributed fiber optical sensing cable and travel towards the first end of said cable, and
- a data processor for obtaining physical data from the spectrum of light backscattered at different points of the length of the distributed fiber optical cable from said points directly, as well as indirectly via the reflective element, towards the pulsed light transmission and receiving assembly.

8. The system of claim 7, wherein the reflective element is provided by a mirror, a reflective coating at said second end of the fiber, a micro optic component or a fiber bragg grating (FBG).
